# EUROPEAN PATENT SPECIFICATION

(11) **EP 2 883 624 B1**
(45) Date of publication and mention of the grant of the patent: **09.11.2022**
(21) Application number: 13197036.0
(22) Date of filing: 12.12.2013
(51) Int. Cl.: B07B 1/00, B07B 13/16, B02C 21/02, B65G 41/00

(54) **A mobile aggregate processing plant**
Mobile Aggregatverarbeitungsanlage
Installation mobile de traitement d'agrégat

(43) Date of publication of application: 17.06.2015
(73) Proprietor: Portafill International Limited, Omagh Tyrone BT79 9JR (GB)
(72) Inventor: Rafferty, Malachy James, Omagh, Tyrone BT79 PJR (GB)
(74) Representative: Schütte, Gearoid

(56) References cited:
- WO-A2-2007/093645
- DE-C- 899 171
- US-A- 5 183 160
- US-A- 5 261 171

## Description

### Introduction

This invention relates to a mobile aggregate processing plant.

The invention particularly relates to a mobile aggregate processing plant of the type comprising a mobile chassis with aggregate handling equipment, such as a crusher and screen for example, mounted on the chassis and an auxiliary conveyor for mounting at the side of the chassis. In conventional plant of this type the auxiliary conveyor is removable from the chassis when not in use. This presents a difficulty in that it requires additional lifting equipment, such as a crane, in order to mount the auxiliary conveyor on the chassis when required for use and to remove the auxiliary conveyor from the chassis for transport. Also, use of the auxiliary conveyor when mounted on the chassis is relatively limited.

The present invention is directed at overcoming these problems.

WO 2007/093645 discloses a material screening apparatus in accordance with the preamble of claim 1, having a conveyor with a tail end pivotally mounted on a chassis of the apparatus for movement of the conveyor between a folded stored position against the chassis an operative position projecting outwardly at a side of the chassis. US 5,183,160 discloses a padding machine having a screen for screening backfill material for delivery by a conveyor into a trench in which a pipe has been laid. A tail end of the conveyor is pivotally mounted on a frame of the machine and a head end of the conveyor can be moved laterally in or out relative to the frame to adjust the location at which material is discharged from the conveyor. Another pipeline padding machine is disclosed in US 5,261,171 having a side mounted discharge conveyor which can pivot laterally about a pivot mount at a tail end of the conveyor. DE 899171 discloses a conveyor mounted on a carriage by a turntable for rotation of the conveyor about a vertical axis. The conveyor is mounted on the turntable by a slide mechanism which allows longitudinal adjustment of the conveyor on the turntable.

### Summary of the Invention

According to the invention there is provided a mobile aggregate processing plant in accordance with claim 1, including a mobile chassis, aggregate handling equipment mounted on the chassis and a conveyor mounted on the chassis by an adjustable mounting support for movement between a folded stored position on it's side against the chassis and an operative position at a side of the chassis, the mounting support engaging with the conveyor intermediate ends of the conveyor, characterised in that the mounting support has a lateral slide for moving the conveyor in a lateral direction.

In another embodiment, the mounting support engages with a central portion of the conveyor.

In another embodiment, the mounting support comprises a cantilevered support arm for mounting the conveyor on the chassis.

In another embodiment, the mounting support is operable to pivot the conveyor about three mutually perpendicular axes.

In another embodiment, the conveyor is pivotable about a folding axis extending along an inner side of the conveyor substantially parallel to the longitudinal axis of the conveyor and the conveyor is pivotable about a swivel axis for lateral movement of each end of the conveyor relative to the mounting support, and the conveyor is pivotable about a tilt axis for adjusting the slope of the conveyor.

In another embodiment, the swivel axis is substantially vertical and the tilt axis is substantially horizontal.

In a further embodiment, the conveyor is moveable into a recirculating position the chassis in which an infeed end of the conveyor is positioned for reception of aggregate material discharged from the aggregate handling equipment and a discharge end of the conveyor is positioned to discharge aggregate material to an inlet of the aggregate handling equipment.

In another embodiment, the mounting support has a telescopic arm, an inner end of the telescopic arm being fixed to the chassis and an outer end of the telescopic arm being attached to the conveyor, and actuating means for relative movement of the inner end and outer end of the telescopic arm.

In another embodiment a swivel actuator is mounted between the inner end of the telescopic arm and a swivel joint mounted at the outer end of the telescopic arm on which the conveyor is mounted, said swivel actuator operable to swivel the conveyor on the support arm. The swivel actuator may be provided by a rod having an outer end attached to the swivel joint and an inner end which is moveable between end stops as the actuating means for the telescopic arm is operated, engagement of the rod against the end stops as the actuating means for the telescopic arm extends and retracts causing swivelling of the swivel joint. Alternatively the swivel actuator may be provided by a ram.

In another embodiment, the conveyor is movable in a longitudinal direction on the mounting support.

In another embodiment, the mounting support is connected to the conveyor by a longitudinal slide for moving the conveyor in a longitudinal direction.

In another embodiment, the longitudinal slide comprises a first slide element and a complementary second slide element which is slidably engageable with the first slide element, one of the slide elements being mounted on the mounting support and the other of the slide elements being mounted on the conveyor.

In another embodiment, the first slide element comprises a pair of space-apart slide rods and the second slide element comprises an elongate slide slot which slidably receives the slide rods.

In another embodiment, a pair of spaced-apart slide slots are provided, each of the slide slots being associated with one of the slide rods.

In another embodiment, the slide rods are mounted on the mounting support and the or each elongate slide slot is mounted on the conveyor.

In another embodiment, the slide rods are mounted on a carrier beam, said carrier beam being pivotally mounted on the mounting support for pivoting the conveyor on the mounting support about the folding axis.

In another embodiment, the aggregate handling equipment includes and infeed hopper, a crusher mounted at an outlet of the infeed hopper, a crusher discharge conveyor mounted at an outlet of the crusher, a screen mounted at an outlet of the crusher discharge conveyor, a screen discharge conveyor mounted at an outlet of the screen, a discharge end of the screen discharge conveyor feeding an infeed hopper at an infeed end of the conveyor.

In another embodiment, the mounting support comprises a telescopic support arm having an outer fixed sleeve attached to the chassis and a complementary inner slide member slidably mounted within the sleeve, an actuating ram connected between the sleeve and the slide member, a swivel joint at an outer end of the slide member comprising a mounting bracket attached to the slide member by a first pivot pin, a swivel actuating ram connected between the sleeve and the mounting bracket for pivoting the mounting bracket on the first pivot pin, a conveyor support frame pivotally mounted by a second pivot pin on the mounting bracket, said second pivot pin having a pivot axis which is perpendicular to the pivot axis of the first pivot pin, a tilt actuating ram connected between the mounting bracket and the conveyor support frame, the longitudinal slide being mounted on the conveyor support frame by a carrier beam which is pivotally mounted on the conveyor support frame and is pivotable by means of a ram for movement of the conveyor between a folded stored position on it's side on the conveyor support frame and a deployed operative position.

In another embodiment the invention provides a mobile chassis with a conveyor mounted on the chassis by an adjustable mounting support for movement between a folded stored position against the chassis and an operative position at a side of the chassis.

In another aspect the invention provides an adjustable mounting support for mounting a conveyor on a chassis for movement from a folded stored position against the chassis and an operative position at the side of the chassis as described herein.

In a still further aspect the invention provides an adjustable mounting support in combination for a conveyor for mounting the conveyor on a chassis for movement between a folded stored position against the chassis and an operative position at a side of chassis as described herein.

### Brief Description of the Drawings

The invention will be more clearly understood by the following description of some embodiments thereof, given by way of example only with reference to the accompanying drawings, in which:
Fig. 1 is a perspective view of a mobile aggregate processing plant according to the invention;
Fig. 2 is an elevational view of the mobile aggregate processing plant;
Fig. 3 is a plan view of the mobile aggregate processing plant;
Fig. 4 is a plan view similar to Fig. 3 showing a conveyor forming portion of the mobile aggregate processing plant in another position of use;
Fig. 5 is a detail perspective view of a conveyor and associated adjustable mounting support forming portion of the mobile aggregate processing plant;
Fig. 6 is a detail plan view of the conveyor and mounting support;
Fig. 7 is a detail plan view similar to Fig. 6 showing the conveyor in another position of use;
Fig. 8 is a detail perspective view showing the conveyor in a folded position;
Fig. 9 is another detail perspective view of the conveyor in the folded position; and
Fig. 10 is an enlarged detail perspective view showing the adjustable mounting support for the conveyor.

### Detailed Description of the Preferred Embodiments

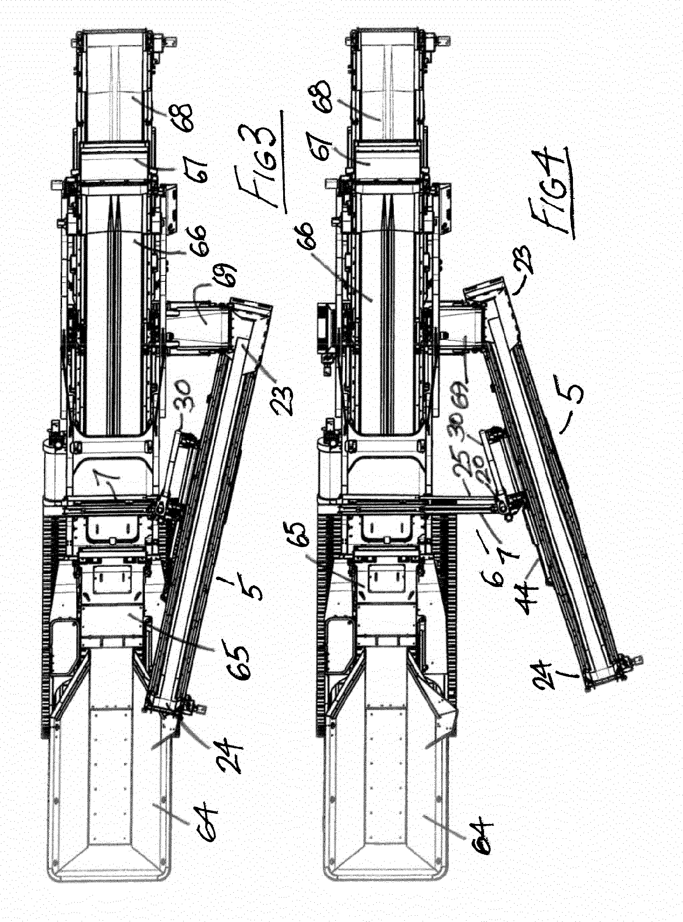

Referring to the drawings there is illustrated a mobile aggregate processing plant according to the invention indicated generally by the reference numeral 1. The mobile aggregate processing plant 1 comprises a mobile chassis 2 which in this case is mounted on tracks 3. Aggregate handling equipment, indicated generally by the reference numeral 4, is mounted on the chassis 2. In accordance with the present invention, a conveyor 5 is mounted on the chassis 2 by an adjustable mounting support 6 and is movable between a folded stored position against one side of the chassis 2 and a number of deployed operative positions at a side of the chassis 2, as shown in Fig. 3 and Fig. 4 for example and described in more detail later.

It will be noted that the mounting support 6 engages the conveyor 5 intermediate the ends of the conveyor 5. In this case the mounting support 6 engages with a generally central portion of the conveyor 5. The mounting support 6 comprises a cantilevered support arm 7 having an inner end 8 fixed to the chassis 2 and an outer end 9 attached to the conveyor 5.

In this case the support arm 7 is telescopic and forms a lateral slide for moving the conveyor 5 in a lateral direction. The support arm 7 has an inner slide member 10 which is slidably engaged within a complementary outer sleeve 11 which is fixed on the chassis 2. A lateral slide actuating ram 12 extends between the inner slide member 10 and the sleeve 11 for extension and retraction of the support arm 7.

A swivel joint 20 is mounted at the outer end 9 of the support arm 7. The swivel joint 20 has a mounting bracket 21 and is mounted at the outer end 9 of the support arm 7 by a pivot pin 22 which allows the mounting bracket 21 to swivel about a vertical swivel axis for lateral movement of an infeed end 23 and/or discharge end 24 of the conveyor. A swivel actuator 25 is mounted between the sleeve 11 of the support arm 7 and the mounting bracket 21, being attached by pivot connectors 26, 27, for swivelling the mounting bracket 21 on the end of the support arm 7 and hence causing the conveyor 5 to swivel about the pivot pin 22.

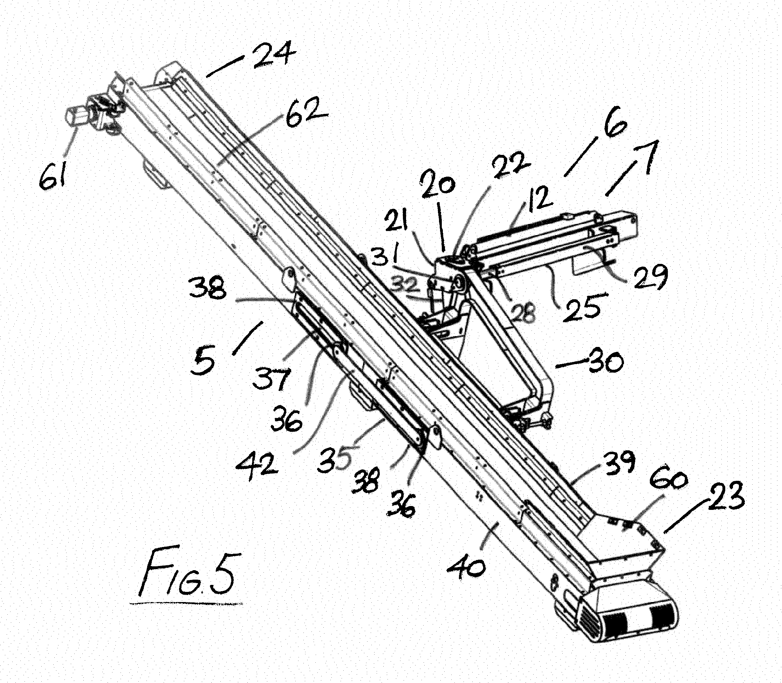

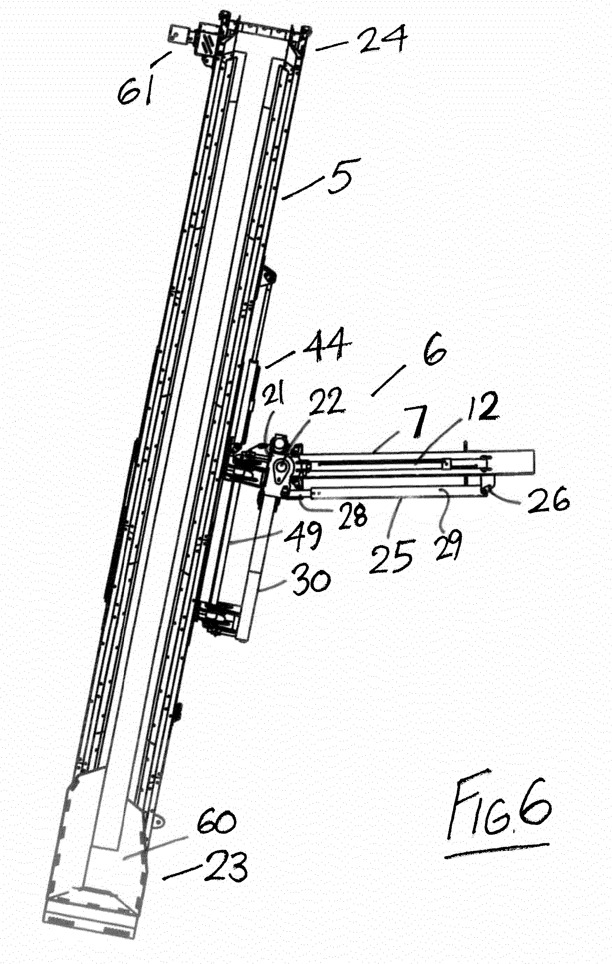

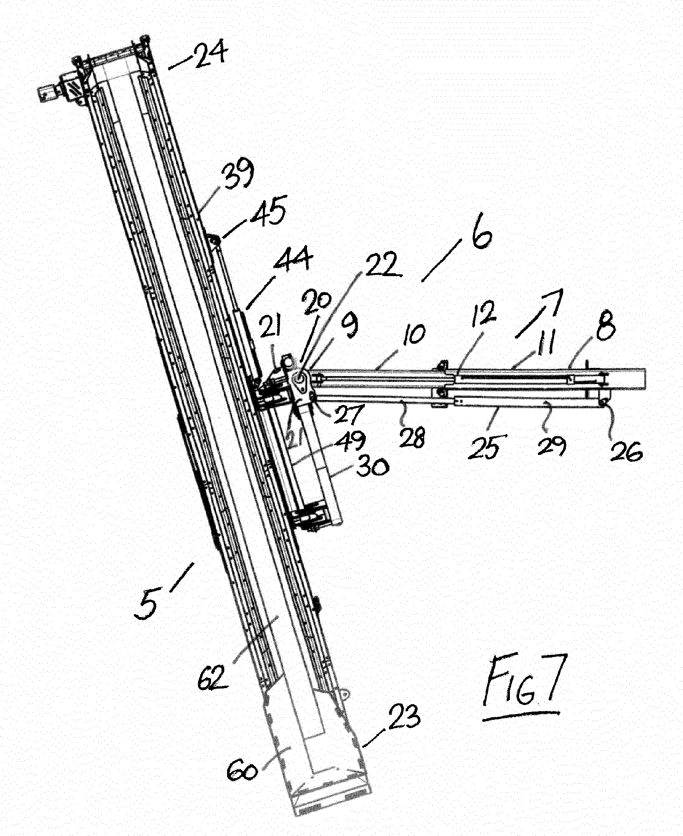

Referring in particular to Figs. 5 to 7, the swivel actuator 25 works in tandem with the slide actuating ram 12 to swivel the conveyor 5. The swivel actuator 25 is telescopic and comprises a rod 28 slideable within an elongate housing 29 between inner and outer endstops (not shown) within the housing 29. Thus when the ram 12 is partially extended an inner end of the rod 28 will abut an outer endstop to lock the swivel actuator 25 in the extended position. Further extension of the ram 12 swivels the mounting bracket 21 and hence the conveyor 5 about the pivot pin 22 in a first direction (as shown in Fig. 7). Similarly, when the ram 12 is partially retracted the inner end of the rod 28 abuts the inner endstop to lock the swivel actuator 25 in the collapsed position. Further retraction of the ram 12 causes the mounting bracket 21, and hence the conveyor 5 to swivel about the pivot pin 22 in a second direction (as shown in Fig. 6). In an alternative arrangement the swivel actuator 25 could be provided by an independently operable swivel actuating ram.

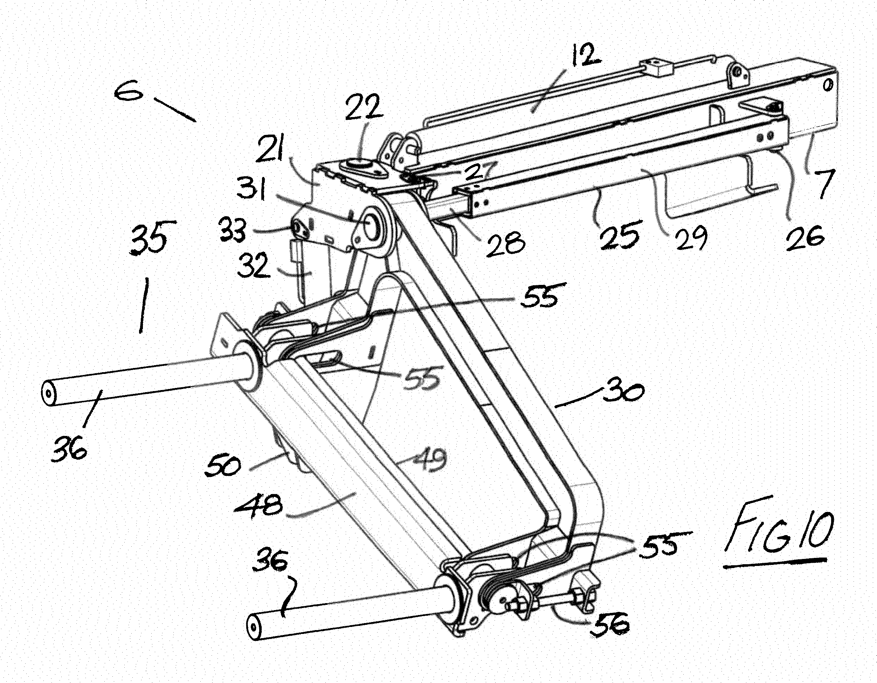

A conveyor support frame 30 (best seen in Fig.10) is pivotally mounted by a pivot pin 31 on the mounting bracket 21. A tilt actuating ram 32 extends between the mounting bracket 21 and the conveyor support frame 30, being attached by pivot connectors 33, 34, for pivoting the conveyor support frame 30 about the pivot pin 31 and hence tilting the conveyor 5 as required to any desired angle. It will be noted that the pivot pin 31 has a pivot axis which is perpendicular to the pivot axis of pivot pin 22.

Referring in particular to Fig. 5 and Fig. 10, the conveyor support frame 30 of the mounting support 6 is connected to the conveyor 5 by a longitudinal slide 35 which is operable for moving the conveyor 5 in a longitudinal direction. The longitudinal slide 35 comprises a pair of spaced-apart parallel slide rods 36 mounted on the mounting support 6 which slidably engage with complementary slide slots 37 in slide plates 38 mounted on opposite side frame elements 39, 40 of the conveyor 5. A retaining bar 42 is demountably secured by fasteners between outer ends of the slide rods 36. A longitudinal slide actuating ram 44 (Fig. 7) extends between a pivot connector on the conveyor mounting frame 30 and a mounting point 45 on the inner side frame member 39 of the conveyor 5 and is operable to slide the slide rods 36 in the slide slots 37 for longitudinal sliding of the conveyor 5 on the conveyor support frame 30.

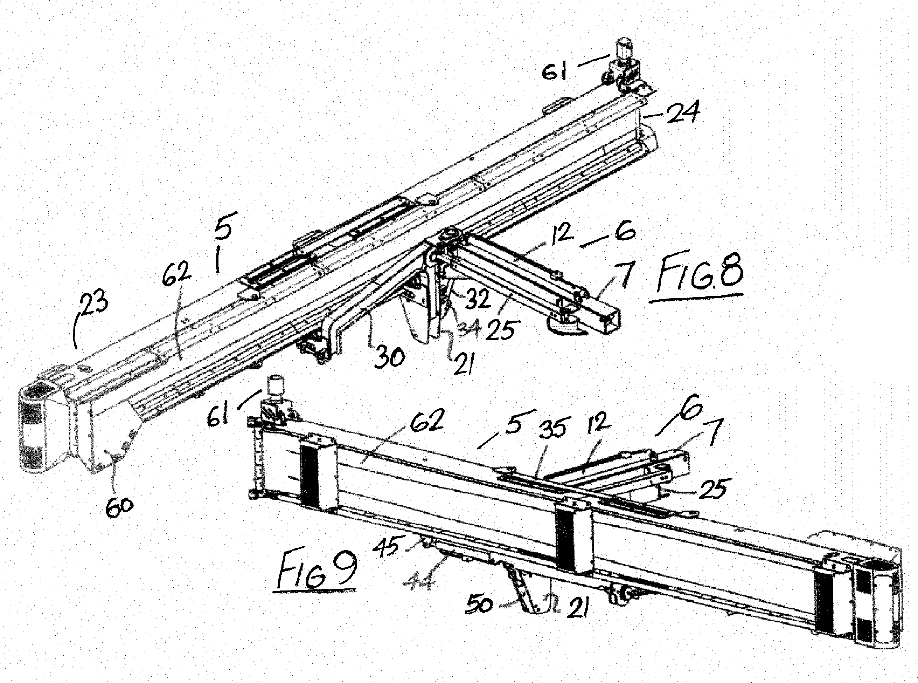

Referring in particular to Fig.9 and Fig.10, the slide rods 36 are mounted on a carrier beam 48 which is pivotally mounted on a shaft 49 on the conveyor support frame 30. A conveyor folding ram 50 is mounted between the beam 48 and the conveyor support frame 30 and is operable to swivel the beam 48 on the shaft 49 for movement of the conveyor 5 between a folded stored position on the support frame 30 as shown in Figs. 8 and 9 with the conveyor 5 on its side, and hence in a folded stored position against the chassis 2, and a deployed operative position as shown in Figs.3 to 7.

The shaft 49 is mounted in elongate slots 55 in the conveyor support frame 30 and associated adjustment screws 56 at each end of the shaft 49 are operable to position the shaft 49 in the slots 55 at any desired position.

An infeed hopper 60 is mounted at the infeed end 23 of the conveyor 5. An hydraulic motor 61 mounted at the discharge end 24 of the conveyor 5 drives an endless belt 62 of the conveyor 5 extending between the infeed end 23 and the discharge end 24 of the conveyor 5 in the usual way.

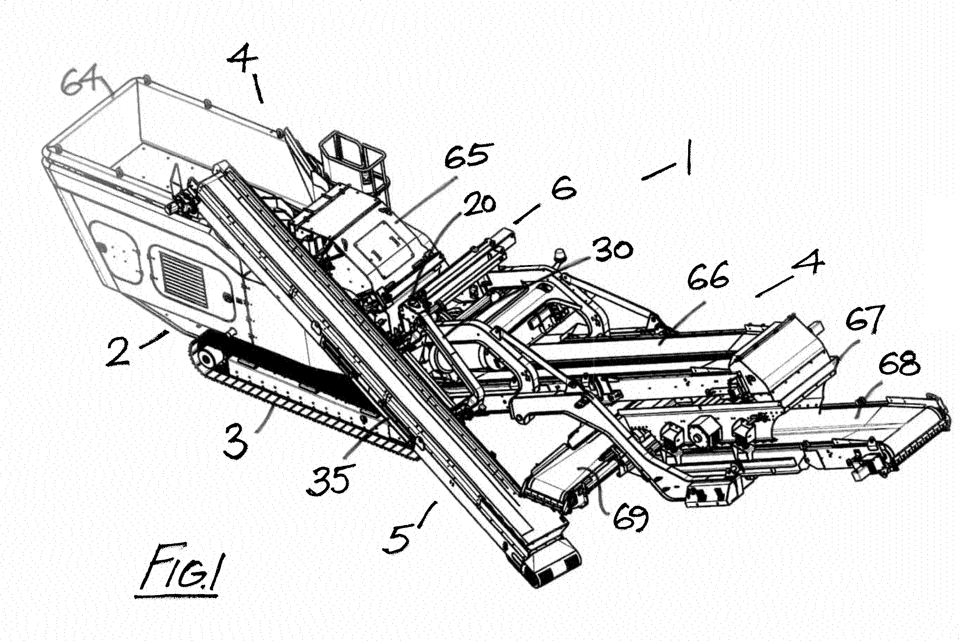

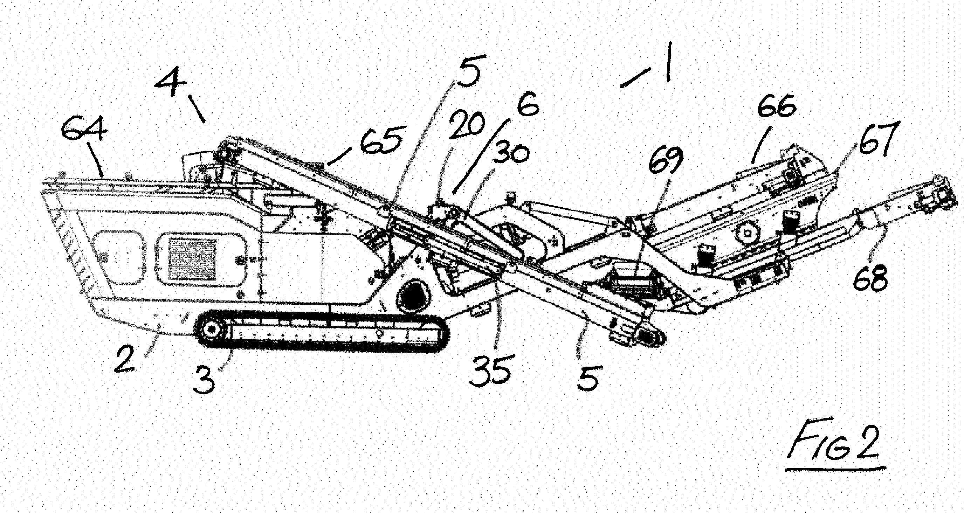

Referring in particular to Figs. 1 and 2, in this case the aggregate handling equipment 4 comprises an infeed hopper 64 mounted on the chassis 2. A crusher 65 is mounted on the chassis 2 at an outlet of the infeed hopper 64. A discharge conveyor 66 is mounted at an outlet of the crusher 65 for delivery of material from the crusher 65 to a screen 67. Material of the desired size will fall through the screen 67 onto a discharge conveyor 68 for delivery to a stockpile for example. Oversized material is delivered from the screen 67 onto a second discharge conveyor 69 which discharges the oversized material laterally onto the conveyor 5 which in the position shown in Fig. 1 will return the oversized material to the infeed hopper 64 for recirculation through the crusher 65. Alternatively, as shown in Fig. 4 the conveyor 5 may be positioned to deliver the material to a stockpile to one side of the chassis 2.

It will be appreciated that in the mobile aggregate processing plant 1 of the invention the arrangement of the mounting support 6 firstly mounts the conveyor 5 on the chassis 2, allowing movement of the conveyor 5 between a folded stored position on it's side against the chassis 2 and various deployed operative positions. Further the mounting support 6 provides great flexibility in the movement and positioning of the conveyor 5 into a number of different operating positions on the chassis 2. As the conveyor is mounted on the chassis 2 the mobile aggregate processing plant 1 is self-contained and fully operational without the need for separate lifting gear to mount/demount the conveyor 5.

The invention is not limited to the embodiments hereinbefore described which may be varied in both construction and detail insofar as these are within the scope of the appended claims.

## Claims

1. A mobile aggregate processing plant (1), including a mobile chassis (2), aggregate handling equipment (4) mounted on the chassis (2) and a conveyor (5) mounted on the chassis (2) by an adjustable mounting support (6) for movement between a folded stored position on it's side against the chassis (2) and an operative position at a side of the chassis (2), the mounting support (6) engaging with the conveyor (5) intermediate ends of the conveyor (5), **characterised in that** the mounting support (6) has a lateral slide for moving the conveyor (5) in a lateral direction.

2. The mobile aggregate processing plant (1) as claimed in claim 1 wherein the mounting support (6) engages with a central portion of the conveyor (5).

3. The mobile aggregate processing plant (1) as claimed in any preceding claim wherein the mounting support (6) comprises a cantilevered support arm (7) for mounting the conveyor (5) on the chassis (2).

4. The mobile aggregate processing plant (1) as claimed in any preceding claim wherein the mounting support (6) is operable to pivot the conveyor (5) about three mutually perpendicular axes.

5. The mobile aggregate processing plant (1) as claimed in any preceding claim wherein the conveyor (5) is pivotable about a folding axis extending along an inner side of the conveyor (5) parallel to the longitudinal axis of the conveyor (5) and the conveyor (5) is pivotable about a swivel axis for lateral movement of each end of the conveyor (5) relative to the mounting support (6), and the conveyor (5) is pivotable about a tilt axis for adjusting the slope of the conveyor (5).

6. The mobile aggregate processing plant (1) as claimed in claim 5 wherein the swivel axis is vertical and the tilt axis is horizontal.

7. The mobile aggregate processing plant (1) as claimed in claimed in any preceding claim wherein the conveyor (5) is moveable into a recirculating position the chassis (2) in which an infeed end of the conveyor (5) is positioned for reception of aggregate material discharged from the aggregate handling equipment (4) and a discharge end of the conveyor (5) is positioned to discharge aggregate material to an inlet of the aggregate handling equipment (4).

8. The mobile aggregate processing plant (1) as claimed in any preceding claim wherein the mounting support (6) has a telescopic arm (7), an inner end of the telescopic arm (7) being fixed to the chassis (2) and an outer end of the telescopic arm (7) being attached to the conveyor (5), and actuating means (12) for relative movement of the inner end and outer end of the telescopic arm (7).

9. The mobile aggregate processing plant (1) as claimed in any preceding claim wherein the conveyor (5) is movable in a longitudinal direction on the mounting support (6).

10. The mobile aggregate processing plant (1) as claimed in claim 9 wherein the mounting support (6) is connected to the conveyor (5) by a longitudinal slide (35) for moving the conveyor (5) in a longitudinal direction, the longitudinal slide (35) comprising a first slide element (36) and a complementary second slide element (37) which is slidably engageable with the first slide element (36), one of the slide elements (36, 37) being mounted on the mounting support (6) and the other of the slide elements being mounted on the conveyor (5).

11. The mobile aggregate processing plant (1) as claimed in claim 10 wherein the first slide element comprises a pair of space-apart slide rods (36) and the second slide element comprises an elongate slide slot (37) which slidably receives the slide rods (36).

12. The mobile aggregate processing plant (1) as claimed in claim 11 wherein the slide rods (36) are mounted on a carrier beam (48), said carrier beam (48) being pivotally mounted on the mounting support (6) for pivoting the conveyor (5) on the mounting support (6) about the folding axis.

13. The mobile aggregate processing plant (1) as claimed in any preceding claim wherein the mounting support (6) comprises a telescopic support arm (7) having an outer fixed sleeve (11) attached to the chassis (2) and a complementary inner slide member (10) slidably mounted within the sleeve (11), an actuating ram (12) connected between the sleeve (11) and the slide member (10), a swivel joint (20) at an outer end of the slide member (10) comprising a mounting bracket (21) attached to the slide member (10) by a first pivot pin (22), a swivel actuator (25) connected between the sleeve (11) and the mounting bracket (21) for pivoting the mounting bracket (21) on the first pivot pin (22), a conveyor support frame (30) pivotally mounted by a second pivot pin (31) on the mounting bracket (21), said second pivot pin (31) having a pivot axis which is perpendicular to the pivot axis of the first pivot pin (22), a tilt actuating ram (32) connected between the mounting bracket (21) and the conveyor support frame (30), the longitudinal slide (35) being mounted on the conveyor support frame (30) by a carrier beam (48) which is pivotally mounted on the conveyor support frame (30) and is pivotable by means of a ram (50) for movement of the conveyor (5) between a folded stored position on it's side on the conveyor support frame (30) and a deployed operative position.

## Patentansprüche

1. Mobile Zuschlagstoffverarbeitungsanlage (1), einschließlich eines mobilen Fahrgestells (2), einer Zuschlagstoffhandhabungsausrüstung (4), die auf dem Fahrgestell (2) montiert ist, und eines Förderers (5), der auf dem Fahrgestell (2) durch einen verstellbaren Montageträger (6) für eine Bewegung zwischen einer zusammengeklappten Aufbewahrungsposition auf seiner Seite gegen das Fahrgestell (2) und einer Betriebsposition an einer Seite des Fahrgestells (2) montiert ist, wobei der Montageträger (6) mit dem Förderer (5) Zwischenenden des Förderers (5) in Eingriff nimmt, **dadurch gekennzeichnet, dass** der Montageträger (6) einen lateralen Schieber zum Bewegen des Förderers (5) in eine laterale Richtung aufweist.

2. Mobile Zuschlagstoffverarbeitungsanlage (1) nach Anspruch 1, wobei der Montageträger (6) mit einem mittleren Abschnitt des Förderers (5) in Eingriff steht.

3. Mobile Zuschlagstoffverarbeitungsanlage (1) nach einem der vorstehenden Ansprüche, wobei der Montageträger (6) einen freitragenden Trägerarm (7) zum Montieren des Förderers (5) auf dem Fahrgestell (2) umfasst.

4. Mobile Zuschlagstoffverarbeitungsanlage (1) nach einem der vorstehenden Ansprüche, wobei der Montageträger (6) betriebsfähig ist, um den Förderer (5) um drei zueinander senkrechte Achsen herum zu schwenken.

5. Mobile Zuschlagstoffverarbeitungsanlage (1) nach einem der vorstehenden Ansprüche, wobei der Förderer (5) um eine Klappachse herum schwenkbar ist, die sich entlang einer inneren Seite des Förderers (5) parallel zu der Längsachse des Förderers (5) erstreckt, und der Förderer (5) um eine Drehungsachse für die laterale Bewegung jedes Endes des Förderers (5) relativ zu dem Montageträger (6) schwenkbar ist, und der Förderer (5) zum Verstellen der Neigung des Förderers (5) um eine Kippachse herum schwenkbar ist.

6. Mobile Zuschlagstoffverarbeitungsanlage (1) nach Anspruch 5, wobei die Drehungsachse vertikal ist und die Kippachse horizontal ist.

7. Mobile Zuschlagstoffverarbeitungsanlage (1) nach einem der vorstehenden Ansprüche, wobei der Förderer (5) in eine Umlaufposition des Fahrgestells (2) bewegbar ist, in der ein Zufuhrende des Förderers (5) für eine Aufnahme von Zuschlagstoffmaterial positioniert ist, das von der Zuschlagstoffhandhabungsausrüstung (4) abgegeben wird, und ein Abgabeende des Förderers (5) positioniert ist, um Zuschlagstoffmaterial an einen Einlass der Zuschlagstoffhandhabungsausrüstung (4) abzugeben.

8. Mobile Zuschlagstoffverarbeitungsanlage (1) nach einem der vorstehenden Ansprüche, wobei der Montageträger (6) einen Teleskoparm (7), wobei ein inneres Ende des Teleskoparms (7) an dem Fahrgestell (2) fixiert ist und ein äußeres Ende des Teleskoparms (7) an dem Förderer (5) befestigt ist, und ein Betätigungsmittel (12) für die relative Bewegung des inneren Endes und des äußeren Endes des Teleskoparms (7) aufweist.

9. Mobile Zuschlagstoffverarbeitungsanlage (1) nach einem der vorstehenden Ansprüche, wobei der Förderer (5) in einer Längsrichtung auf dem Montageträger (6) bewegbar ist.

10. Mobile Zuschlagstoffverarbeitungsanlage (1) nach Anspruch 9, wobei der Montageträger (6) mit dem Förderer (5) durch einen Längsschieber (35) zum Bewegen des Förderers (5) in einer Längsrichtung verbunden ist, der Längsschieber (35) umfassend ein erstes Schieberelement (36) und ein komplementäres zweites Schieberelement (37), das mit dem ersten Schieberelement (36) verschiebbar in Eingriff bringbar ist, wobei eines der Schieberelemente (36, 37) auf dem Montageträger (6) montiert ist und das andere der Schieberelemente auf dem Förderer (5) montiert ist.

11. Mobile Zuschlagstoffverarbeitungsanlage (1) nach Anspruch 10, wobei das erste Schieberelement ein Paar beabstandeter Schieberstangen (36) umfasst und das zweite Schieberelement einen länglichen Schieberschlitz (37) umfasst, der die Schieberstangen (36) verschiebbar aufnimmt.

12. Mobile Zuschlagstoffverarbeitungsanlage (1) nach Anspruch 11, wobei die Schieberstangen (36) auf einem Tragbalken (48) montiert sind, wobei der Tragbalken (48) zum Schwenken des Förderers (5) auf dem Montageträger (6) um die Klappachse herum auf dem Montageträger (6) schwenkbar montiert ist.

13. Mobile Zuschlagstoffverarbeitungsanlage (1) nach einem der vorstehenden Ansprüche, wobei der Montageträger (6) umfasst: einen teleskopischen Trägerarm (7), der eine äußere fixe Hülse (11), die an dem Fahrgestell (2) befestigt ist, und ein komplementäres inneres Schieberelement (10) aufweist, das innerhalb der Hülse (11) verschiebbar montiert ist, einen Betätigungsstößel (12), der zwischen der Hülse (11) und dem Schieberelement (10) verbunden ist, ein Drehgelenk (20) an einem äußeren Ende des Schieberelements (10), umfassend eine Montagehalterung (21), die an dem Schieberelement (10) durch einen ersten Schwenkstift (22) befestigt ist, eine Drehbetätigungseinrichtung (25), die zwischen der Hülse (11) und der Montagehalterung (21) zum Schwenken der Montagehalterung (21) auf dem ersten Schwenkstift (22) verbunden ist, einen Fördererträgerrahmen (30), der durch einen zweiten Schwenkstift (31) auf dem Montageträger (21) schwenkbar montiert ist, wobei der zweite Schwenkstift (31) eine Schwenkachse aufweist, die senkrecht zu der Schwenkachse des ersten Schwenkstifts (22) ist, einen Kippbetätigungsstößel (32), der zwischen der Montagehalterung (21) und dem Fördererträgerrahmen (30) verbunden ist, wobei der Längsschieber (35) auf dem Fördererträgerrahmen (30) durch einen Tragbalken (48) montiert ist, der auf dem Förderträgerrahmen (30) schwenkbar montiert ist und mittels eines Stößels (50) für die Bewegung des Förderers (5) zwischen einer zusammengeklappten Aufbewahrungsposition auf seiner Seite auf dem Fördererträgerrahmen (30) und einer ausgefahrenen Betriebsposition schwenkbar ist.

## Revendications

1. Installation mobile de traitement d'agrégat (1), comportant un châssis mobile (2), un équipement de manutention d'agrégat (4) monté sur le châssis (2) et un convoyeur (5) monté sur le châssis (2) par un support de montage réglable (6) pour un déplacement entre une position repliée stockée sur son côté contre le châssis (2) et une position opérationnelle sur un côté du châssis (2), le support de montage (6) venant en prise avec le convoyeur (5) aux extrémités intermédiaires du convoyeur (5), **caractérisée en ce que** le support de montage (6) présente un coulisseau latéral pour déplacer le convoyeur (5) dans une direction latérale.

2. Installation mobile de traitement d'agrégat (1) selon la revendication 1, dans laquelle le support de montage (6) vient en prise avec une partie centrale du convoyeur (5).

3. Installation mobile de traitement d'agrégat (1) selon l'une quelconque des revendications précédentes, dans laquelle le support de montage (6) comprend un bras de support en porte-à-faux (7) pour monter le convoyeur (5) sur le châssis (2).

4. Installation mobile de traitement d'agrégat (1) selon l'une quelconque des revendications précédentes, dans laquelle le support de montage (6) peut fonctionner pour faire pivoter le convoyeur (5) autour de trois axes mutuellement perpendiculaires.

5. Installation mobile de traitement d'agrégat (1) selon l'une quelconque des revendications précédentes, dans laquelle le convoyeur (5) peut pivoter autour d'un axe de pliage s'étendant le long d'un côté interne du convoyeur (5) parallèle à l'axe longitudinal du convoyeur (5) et le convoyeur (5) peut pivoter autour d'un axe de pivotement pour un mouvement latéral de chaque extrémité du convoyeur (5) par rapport au support de montage (6), et le convoyeur (5) peut pivoter autour d'un axe d'inclinaison pour régler la pente du convoyeur (5).

6. Installation mobile de traitement d'agrégat (1) selon la revendication 5, dans laquelle l'axe de pivotement est vertical et l'axe d'inclinaison est horizontal.

7. Installation mobile de traitement d'agrégat (1) selon l'une quelconque des revendications précédentes, dans laquelle le convoyeur (5) peut être déplacé dans une position de recirculation du châssis (2) dans lequel une entrée du convoyeur (5) est positionnée pour recevoir du matériau d'agrégat déchargé de l'équipement de manutention d'agrégat (4) et une extrémité de décharge du convoyeur (5) est positionnée pour décharger du matériau d'agrégat vers un orifice d'entrée de l'équipement de manutention d'agrégat (4).

8. Installation mobile de traitement d'agrégat (1) selon l'une quelconque des revendications précédentes, dans laquelle le support de montage (6) a un bras télescopique (7), une extrémité interne du bras télescopique (7) étant fixée au châssis (2) et une extrémité externe du bras télescopique (7) étant fixée au convoyeur (5), et des moyens d'actionnement (12) pour le mouvement relatif de l'extrémité interne et de l'extrémité externe du bras télescopique (7).

9. Installation mobile de traitement d'agrégat (1) selon l'une quelconque des revendications précédentes, dans laquelle le convoyeur (5) est mobile dans une direction longitudinale sur le support de montage (6).

10. Installation mobile de traitement d'agrégat (1) selon la revendication 9, dans laquelle le support de montage (6) est relié au convoyeur (5) par un coulisseau longitudinal (35) pour déplacer le convoyeur (5) dans une direction longitudinale, le coulisseau longitudinal (35) comprenant un premier élément coulissant (36) et un second élément coulissant complémentaire (37) qui peut venir en prise de manière coulissante avec le premier élément coulissant (36), l'un des éléments coulissants (36, 37) étant monté sur le support de montage (6) et l'autre des éléments coulissants étant monté sur le convoyeur (5).

11. Installation mobile de traitement d'agrégat (1) selon la revendication 10, dans laquelle le premier élément coulissant comprend une paire de tiges coulissantes espacées (36) et le second élément coulissant comprend une fente coulissante allongée (37) qui reçoit de manière coulissante les tiges coulissantes (36).

12. Installation mobile de traitement d'agrégat (1) selon la revendication 11, dans laquelle les tiges coulissantes (36) sont montées sur une poutre porteuse (48), ladite poutre porteuse (48) étant montée de manière pivotante sur le support de montage (6) pour faire pivoter le convoyeur (5) sur le support de montage (6) autour de l'axe de pliage.

13. Installation mobile de traitement d'agrégat (1) selon l'une quelconque des revendications précédentes, dans laquelle le support de montage (6) comprend un bras de support télescopique (7) ayant un manchon fixe externe (11) fixé au châssis (2) et un élément coulissant interne complémentaire (10) monté de manière coulissante à l'intérieur du manchon (11), un vérin d'actionnement (12) relié entre le manchon (11) et l'élément coulissant (10), un raccord articulé (20) à une extrémité externe de l'élément coulissant (10) comprenant un support de fixation (21) fixé à l'élément coulissant (10) par un premier pivot (22), un actionneur pivotant (25) relié entre le manchon (11) et le support de fixation (21) pour faire pivoter le support de fixation (21) sur le premier pivot (22), un cadre support de convoyeur (30) monté de manière pivotante par un second pivot (31) sur le support de montage (21), ledit second pivot (31) ayant un axe de pivotement qui est perpendiculaire à l'axe de pivotement du premier pivot (22), un vérin d'actionnement d'inclinaison (32) relié entre le support de fixation (21) et le cadre support du convoyeur (30), le coulisseau longitudinal (35) étant monté sur le cadre support de convoyeur (30) par une poutre porteuse (48) qui est montée de manière pivotante sur le cadre support de convoyeur (30) et peut pivoter au moyen d'un vérin (50) pour le déplacement du convoyeur (5) entre une position repliée stockée sur le côté sur le cadre support de convoyeur (30) et une position opérationnelle déployée.
